(19) Europäisches Patentamt
European Patent Office
Office européen des brevets

(11) EP 1 217 012 A1

(12) EUROPEAN PATENT APPLICATION

(43) Date of publication:
26.06.2002 Bulletin 2002/26

(51) Int Cl.$^7$: C08F 8/44

(21) Application number: 01121490.5

(22) Date of filing: 07.09.2001

(84) Designated Contracting States:
AT BE CH CY DE DK ES FI FR GB GR IE IT LI LU MC NL PT SE TR
Designated Extension States:
AL LT LV MK RO SI

(30) Priority: 19.12.2000 JP 2000386002
27.04.2001 JP 2001133064

(71) Applicant: SHOWA DENKO K.K.
Tokyo 105-8518 (JP)

(72) Inventors:
- Kotsuka, Takashi, Kawasaki Plant, Showa Denko K.K. Kawasaki-shi, Kanagawa 210-0867 (JP)
- Okada, Yoshiji, Kawasaki Plant, Showa Denko K.K. Kawasaki-shi, Kanagawa 210-0867 (JP)
- Suzuki, Hiroshi, Kawasaki Plant, Showa Denko K.K. Kawasaki-shi, Kanagawa 210-0867 (JP)

(74) Representative: Strehl Schübel-Hopf & Partner
Maximilianstrasse 54
80538 München (DE)

# (54) Porous polymer particle, alkali-resistant anion exchanger, producing method thereof, column for ion chromatography, and method for measuring anions

(57) The invention relates to a method for measuring anions by suppressor-system or non-suppressor-system ion chromatography, comprising using a column for ion chromatography, which is packed with an alkali-resistant anion exchanger comprising porous polymer particles, in combination with an alkaline eluent, said porous polymer particles comprising an alkali-resistant polymer substrate having bonded thereto through a spacer a nitrogen-containing heterocyclic group having a quaternary ammonium structure which measurement is used for the measurement of halogen oxide ions.

EP 1 217 012 A1

## Description

[DETAILED DESCRIPTION OF THE INVENTION]

[Technical Field to Which the Invention Belongs]

The present invention relates to a porous polymer particle, an alkali-resistant anion exchanger, a producing method thereof, a packing material for a suppressor-system ion chromatography column, comprising the anion exchanger, a column for a suppressor-system ion chromatography, and a method for measuring anions using the column.

More specifically, the present invention relates to a porous polymer particle capable of satisfactorily separating and analyzing inorganic ions such as fluoride ion, chloride ion, nitrite ion, bromide ion, nitrate ion, sulfate ion arid phosphate ion, within a short period of time under an isocratic condition of using a hydroxide-type eluent at a constant concentration; an alkali-resistant anion exchanger for suppressor-system ion chromatography; a producing method thereof; a column for suppressor-system ion chromatography using the anion exchanger; a method for measuring anions using the column; and a measuring method capable of satisfactorily separating and analyzing halogen oxide ions such as chlorite ion, chlorate ion and bromate ion, simultaneously with other inorganic ions (e.g., fluoride ion, chloride ion, nitrite ion, bromide ion, nitrate ion, sulfate ion, phosphate ion) within a short period of time.

[Background Art]

In the inspection or analysis of water quality or in the analysis of food, the matter of importance is the analysis of seven kinds of ions, that is, fluoride ion ($F^-$), chloride ion ($Cl^-$), nitrite ion ($NO_2^-$), bromide ion ($Br^-$), nitrate ion ($NO_3^-$), sulfate ion ($SO_4^{2-}$) and phosphate ion ($PO_4^{3-}$). These ions are called "seven kinds of standard inorganic ions". In recent years, ion chromatography is being used as efficient and high-precision/high-sensitive means for analyzing inorganic anions including these seven kinds of standard inorganic ions.

In the ion chromatography, a sample containing an ion species is injected into an ion exchange column while feeding an eluent into the column and the ions (kind, amount) separated and eluted from the column with a time gap due to the difference in the retention time are detected by a high-sensitivity detector such as electrical conductivity detector. The ion chromatography includes "a suppressor system" using a suppressor and "a non-suppressor system" using no suppressor. The suppressor is an apparatus of displacing a cation in a liquid by a hydrogen ion. As shown in Fig. 1, the suppressor is connected between the separation column and the detector and at the time of detecting ions by an electrical conductivity detector, undertakes an action to decrease the electrical conductivity of the background and thereby increase the measurement sensitivity.

More specifically, in "the suppressor system", a mixed solution of sodium carbonate and sodium hydrogencarbonate, a boric acid buffer, an aqueous sodium hydroxide solution, an aqueous potassium hydroxide solution or the like is passed through as the eluent to separate the sample ion in the separation column and thereafter the ion separated is detected by an electrical conductivity detector through a suppressor. By designating the electrically conductivity of the eluent itself as the electrical conductivity of the background, the electrical conductivity measured by the detector is recognized as a signal superposed by the contribution of the ion species in the sample. The suppressor converts a salt or a base in the eluent to an acid having a lower degree of dissociation, whereby the electrical conductivity of the background is reduced and the measurement sensitivity of signals by the ion species in the sample is improved.

The suppressor system requires an exclusive apparatus as compared with the non-suppressor system but since high sensitivity can be attained, this system is indispensable for the control of pure water, chemicals and the like used in the semiconductor art.

The anion exchanger heretofore predominantly used for the suppressor-system column includes a pellicular-type ion exchanger obtained by sulfonating a styrene/divinylbenzene-type substrate and coating an anion exchangeable latex thereon, and a porous chemical bond-type ion exchanger obtained by introducing an anion exchange group into a polyvinyl alcohol substrate.

The pellicular-type ion exchanger restricts the migration of ions only to the surface of the packing and does not allow their entering into pores, therefore, this ion exchanger is advantageous in that (1) the diffusion is almost prevented from occurring and (2) the ion does not interfere with the substrate. However, on the other hand, this ion exchanger is disadvantageous in that the usable surface area of the packing is limited in view of the structure and therefore, the column efficiency is limited. For elevating the column efficiency of the pellicular-type ion exchanger, it is necessary to increase the column length or to reduce the particle size of the packing. However, the column used at present already has a large length of 250 mm and more increase of the column length is not practical. Although reduction in the particle size may be thought, even a packing having a particle size of about 5 μm which is commonly used in the high-performance liquid chromatography, is very difficult to manufacture due to limitation in view of the structure. Therefore, the pellicular-type ion exchanger cannot satisfy the requirement to have higher performance than the current

theoretical plate number of 6,000 plates/column.

On the other hand, the porous chemical bond-type ion exchanger is excellent in the effective surface area of the packing because the ion migrates into pores to undertake the ion exchange, therefore, this ion exchanger has a possibility of achieving higher performance than the pellicular-type ion exchanger using a styrene/divinylbenzene-type copolymer substrate. The present inventors have proposed a porous chemical bond-type ion exchanger originated in a polyvinyl alcohol substrate having a sufficiently high alkali resistance even under the alkali conditions in the analysis of anions by the suppressor system, and a production method thereof (see, JP-A-2001-40032, the term "JP-A" as used herein means an "unexamined published Japanese patent application"). In the analysis using a column packed with this anion exchanger, excellent properties can be advantageously obtained, for example, a higher theoretical plate number can be obtained, and the position where a carbonate dip (in the analysis of anions using ion chromatography, carbon dioxide gas contained in the sample is also detected as carbonate ion; the carbonate ion peak is here called a carbonate dip) appears can be controlled.

In the analysis of anions by ion chromatography, it is usually ideal to separate seven kinds of standard inorganic anions in good balance within an analysis time as short as possible. However, fluoride ion is difficult to hold in the anion exchanger of the separating column and swiftly passes through the column. As the result, a signal peak of fluoride ion and a water dip (a negative peak caused by the dilution of eluent when the sample is injected) cannot be sufficiently separated and the precision of determination is readily impaired.

It may be thought to use an eluent having weak elution strength so as to elevate the retention of fluoride ion, however, in this case, the time necessary for the elution of divalent or greater valence anions (sulfate ion and phosphate ion) becomes very long and this incurs redundancy in the analysis time. This problem is particularly serious when the eluent is alkaline. To overcome this problem, the analysis conditions must be designed so that fluoride ion and divalent or greater valence anions can be simultaneously analyzed.

Accordingly, a method for overcoming the above-described problems by optimizing the eluent composition is being studied. For example, in the non-suppressor system, a method of adding a boric acid to a weakly acidic moving phase, selectively reacting the boric acid and a fluoride ion to produce an anionic compound and thereby elevating the retention is disclosed (see, JP-B-7-37972, the term "JP-B" as used herein means an "examined Japanese patent publication"). In the suppressor system, it is known that when the eluent used is a mixed solution of sodium carbonate and sodium hydrogencarbonate, the retention of fluoride ion can be elevated by changing the compositional ratio therebetween. Furthermore, in the suppressor system, a method of adding a salt compound of boric acid to the eluent is disclosed (see, JP-A-2000-180429). As such, when the eluent can be composed of a plurality of components, the problems can be overcome by changing the composition of the eluent.

However, a hydroxide-type eluent used as the eluent for the suppressor system, such as aqueous sodium hydroxide solution and aqueous potassium hydroxide solution, usually comprises a single component and therefore, the problem cannot be overcome by the eluent. Accordingly, in the measurement by the suppressor system using an alkaline eluent, special means must be used for achieving both the improvement in retention of fluoride ion and the reduction in elution time of divalent or greater valence anions (particularly phosphate ion out of the seven kinds of standard inorganic anions).

The methods heretofore employed are classified into two groups. One is a gradient analysis method of using an eluent graded in the concentration, and the other is a method of setting the ion exchanger packed into the column to a large ion exchange capacity and using an eluent in a high concentration of about 40 mM.

The first method has a problem in that at least two kinds of solutions different in the concentration must be prepared so as to impart a concentration gradient, an apparatus and an operation for absorbing and mixing these solutions using two pumps are required, and a stabilization time for returning the eluent to the original concentration every each measurement is necessary. On the other hand, the second method has a problem in that since the eluent concentration is high, a high voltage must be applied for electrodialysis in the suppressor equipment using a continuous regeneration-type ion exchange membrane, which is being widely used at present, and this shortens the lifetime of the suppressor.

At the time of analyzing tap water by the suppressor system using a hydroxide-type eluent, it is necessary not only to attain both the improvement in the retention of the fluoride ion and the reduction in the elution time of phosphate ion but also to attain satisfactory separation of chloride ion and nitrite ion at the same time. This is because in the analysis of tap water, several ppb of nitrite ion must be analyzed in the presence of tens of ppm of chloride ion. In conventional columns used for a hydroxide-type eluent, the separation of chloride ion and nitrite ion is not satisfied and even if satisfied, since carbonate ion elutes therebetween, the trace nitrite ion cannot be analyzed at the same time.

The present inventors have previously proposed a production method for anion exchangers which are obtained by introducing a tertiary heterocyclic amine into an acrylate- or methacrylate-type polymer through a spacer molecule, and a column packed with this anion exchanger (JP-A-2000-221179). However, the matters proposed are a column for a non-suppressor system ion chromatography which uses an acidic eluent, and a method for producing a packing material for the column, and this is not used for measuring anions as a column for suppressor-system ion

chromatography using an alkaline eluent.

Recently, as the facility for advanced water purification increases, the analysis of halogen oxides such as bromate ion, chlorite ion and chlorate ion is keenly demanded in addition to the analysis of inorganic anions conventionally performed in the analysis of water supply.

For use in the suppressor-system column for the analysis of these halogen oxide ions, IonPac AS9-HC, IonPac AS9-SC and IonPac AS12A are already available from Dionex Corporation. However, in these column packing materials, a styrene/divinylbenzene-type copolymer is used as a substrate and a quaternary alkylamine is introduced as an anion exchange group.

On the other hand, conventionally known suppressor-system columns packed with a porous chemical bond-type ion exchanger comprising a polyvinyl alcohol-type substrate having introduced thereinto an anion exchange group cannot separate and analyze bromide ion, chlorite ion and chlorate ion simultaneously with seven kinds of standard inorganic anions, namely, fluoride ion, chloride ion, nitrite ion, bromide ion, nitrate ion, sulfate ion and phosphate ion. In the present invention, the separation degree R as an index for separation is determined according the following formula. Heretofore, the separation degree R of chlorite ion and bromate ion, and the separation degree R of chlorate ion and bromide ion cannot be made 1.5 or more at the same time (in general, the separation degree R is preferably 1.5 or more).

[Eq. 1]

$$R=2\times(t_2-t_1) / (w_1+w_2)$$

wherein $w_1$ and $w_2$ represent respective peak widths, and $t_1$ and $t_2$ represent respective retention times.

[Problems to be Solved by the Invention]

The present invention has been made under these circumstances and the object of the present invention is to provide an anion exchanger for ion chromatography column, wherein in a suppressor-system ion chromatography using a hydroxide-type eluent, an eluent of low concentration (for example, 20 mM or less) can be used, the gradient analysis cannot be relied on (that is, an isocratic condition at a constant concentration can be used), the elution time of phosphate ion can be shortened to the time period on the order of a dozen of minutes to tens of minutes, fluoride ion which is difficult to hold can be satisfactorily separated from a water dip, and at the same time, chloride ion and nitrite ion can be satisfactorily separated. The object of the present invention includes providing a production method of the anion exchanger, a packing material for a suppressor-system ion chromatography column using the anion exchanger, a column for ion chromatography, a method for inexpensively and precisely measuring anions using the column, and a measuring method capable of separating and analyzing halogen oxide ions such as bromate ion, chlorite ion and chlorate ion simultaneously with seven kinds of standard inorganic anions, that is, fluoride ion, chloride ion, nitrite ion, bromide ion, nitrate ion, sulfate ion and phosphate ion.

[Means to Solve the Problems]

As a result of extensive investigations to attain the above-described objects, the present inventors have found that by using a column packed with an alkali-resistant anion exchanger comprising a porous polymer having a structure such that a nitrogen-containing heterocyclic group containing a quaternary ammonium structure is bonded to the alkali-resistant polymer substrate through a spacer, seven kinds of standard inorganic anions can be satisfactorily separated without relying on the gradient analysis in the suppressor-system ion chromatography using a hydroxide-type eluent and also that bromate ion, chlorite ion and chlorate ion can be separated and analyzed simultaneously with seven kinds of standard inorganic anions, namely, fluoride ion, chloride ion, nitrite ion, bromide ion, nitrate ion, sulfate ion and phosphate ion. The present invention has been accomplished based on these findings.

That is, the present invention relates to a porous polymer particle, an alkali-resistant anion exchanger, a producing method thereof, a packing material for a suppressor-system ion chromatography column comprising the anion exchanger, a column for suppressor-system ion chromatography, and a method for measuring anions using the column.

1. A porous polymer particle comprising an alkali-resistant polymer substrate having bonded thereto through a spacer a nitrogen-containing heterocyclic group containing a quaternary ammonium structure.
2. The porous polymer particle as described in 1 above, wherein the nitrogen-containing heterocyclic group containing a quaternary ammonium structure is derived from an aromatic or non-aromatic heterocyclic compound.

3. The porous polymer particle as described in 2 above, wherein the nitrogen-containing heterocyclic compound is a compound selected from the group consisting of a pyridine compound represented by formula (1):

[Chem. 1]

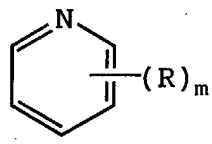

(1)

(wherein R represents an alkyl or alkoxy group having from 1 to 5 carbon atoms, which may be substituted by a hydroxyl group or a halogen atom, or a halogen atom, m represents an integer of 0 to 5, and when m is 2 or more, the plurality of R may be the same or different), a 1-alkylpyrrolidine compound represented by formula (2):

[Chem. 2]

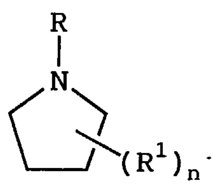

(2)

(wherein R represents an alkyl group having from 1 to 5 carbon atoms, which may be substituted by a hydroxyl group or a halogen atom, $R^1$ represents a hydroxyl group or an alkyl or alkoxy group having from 1 to 5 carbon atoms, which may be substituted by a hydroxyl group, and n represents an integer of 0 to 2), a 1-alkylpiperidine compound represented by formula (3):

[Chem. 3]

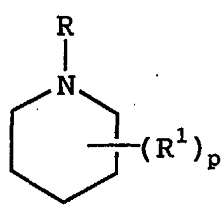

(3)

(wherein R represents an alkyl group having from 1 to 5 carbon atoms, which may be substituted by a hydroxyl group or a halogen atom, $R^1$ represents a hydroxyl group or an alkyl or alkoxy group having from 1 to 5 carbon atoms, which may be substituted by a hydroxyl group, and n represents an integer of 0 to 2), and a piperazine compound represented by formula (4):

[Chem. 4]

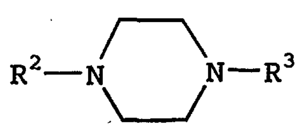

(4)

(wherein $R^2$ and $R^3$ may be the same or different and each independently represents a hydrogen atom or an alkyl group having from 1 to 5 carbon atoms, which may be substituted by a hydroxyl group or a halogen atom, provided that $R^2$ and $R^3$ are not a hydrogen atom at the same time).

4. The porous polymer particle as described in 3 above, wherein the nitrogen-containing heterocyclic compound is pyridine, 2-methylpyridine, 3-methylpyridine, 4-methylpyridine, 2-hydroxy-4-methylpyridine, 2-hydroxy-6-methylpyridine, 2-hydroxypyridine, 3-hydroxypyridine, 4-hydroxypyridine, 1-methylpyrrolidine, 1-ethylpyrrolidine, 1-methylpiperidine, 1-ethylpiperidine, 1-(2-hydroxyethyl)piperidine, 1-(hydroxymethyl)piperidine, 1-(2-hydroxyethylpyrrolidine, 2-(2-hydroxyethyl)-1-methylpyrrolidine, 3-hydroxy-1-methylpiperidine, 4-hydroxy-1-methylpiperidine, 4-chloro-1-methylpiperidine, 1-(2-chloroethyl)piperidine, 1-(2-chloroethyl)pyrrolidine, 1-methylpiperazine, 1-ethylpiperazine or 1,4-dimethylpiperazine.

5. The porous polymer particle as described in any one of 1 to 4 above, wherein the substrate of the porous polymer particle is selected from a polyvinyl alcohol-type copolymer and a styrene/divinylbenzene-type copolymer, the spacer molecule connecting the substrate and the anion exchange group is a compound containing a glycidyl group, and the polymer is bonded to the spacer molecule through a bond incapable of cleaving under alkali conditions.

6. The porous polymer particle as described in any one of 1 to 5 above, wherein the average particle size is 1 to 30 μm.

7. The porous polymer particle as described in any one of 1 to 6 above, wherein the average pore size is 50 to 300 Å.

8. An alkali-resistant anion exchanger comprising porous polymer particles described in any one of 1 to 7 above.

9. A method for producing an alkali-resistant anion exchanger, comprising bonding a spacer molecule containing a glycidyl group to an alkali-resistant polymer porous particle selected from a polyvinyl alcohol-type copolymer and a styrene/divinylbenzene-type copolymer through a bond incapable of cleaving under alkali conditions, and reacting the glycidyl group with a nitrogen-containing heterocyclic group to introduce an anion exchange group.

10. The method for producing an alkali-resistant anion exchanger as described in 9 above, wherein the nitrogen-containing heterocyclic compound is selected from the nitrogen-containing heterocyclic compounds described in 2 or 3 above.

11. The method for producing an alkali-resistant anion exchanger as described in 10 above, wherein a compound containing two or more glycidyl groups within the molecule is reacted with a polyvinyl alcohol-type copolymer obtained by saponifying and thereby partially converting a copolymer of a carboxylic acid vinyl ester and an isocyanurate-type crosslinking monomer into a hydroxyl group, to introduce a glycidyl group-containing group such that the mass thereof after the reaction becomes from 103 to 140 assuming that the mass of the polyvinyl alcohol-type copolymer is 100, and the reaction product is reacted with a nitrogen-containing heterocyclic group.

12. The method for producing an alkali-resistant anion exchanger as described in 11 above, wherein the saponification of the polyvinyl alcohol-type polymer is performed until from 0.5 to 5 meq/g of hydroxyl group is produced in the polymer.

13. A packing material for a suppressor-system ion chromatography column, comprising the anion exchanger described in 8 above.

14. A column for suppressor-system ion chromatography, which is packed with the alkali-resistant anion exchanger described in 8 above.

15. A method for measuring anions by suppressor-system ion chromatography, comprising using the column described in 14 above in combination with an alkaline eluent.

16. The method for measuring anions as described in 15 above, wherein the alkaline eluent is a hydroxide eluent.

17. The method for measuring anions as described in 16 above, wherein the hydroxide-type eluent as the alkaline eluent is used under an isocratic condition at a concentration of 20 mM or less.

18. The method for measuring anions as described in any one of 15 to 17 above, which is used for the measurement of halogen oxide ion.

19. A method for measuring anions by non-suppressor system ion chromatography, comprising using a column packed with the anion exchanger described in 8 above for the measurement of halogen oxide ion.

20. The method for measuring anions as described in 18 or 19 above, wherein the halogen oxide ion is chlorite ion, chlorate ion and/or bromate ion.

21. The method for measuring anions as described in any one of 16 to 20 above, wherein the halogen oxide ion is measured simultaneously with anions selected from the group consisting of fluoride ion, chloride ion, nitrite ion, bromide ion, nitrate ion, sulfate ion and phosphate ion.

22. The method for measuring anions as described in any one of 18 to 21 above, wherein the separation degree of chlorite ion and bromate ion, and the separation degree of chlorate ion and bromide ion are 1.5 or more.

[Mode for Carrying Out the Invention]

The present invention is described in detail below.

(A) Compound containing nitrogen-containing heterocyclic group

For the starting material of a nitrogen-containing heterocyclic group containing a quaternary ammonium structure, an aromatic or non-aromatic nitrogen-containing heterocyclic compound is used. Insofar as the obtained ion exchanger can function as an anion exchanger, the compound may further have a substituent on the carbon constituting the ring.

Examples of the aromatic nitrogen-containing heterocyclic compound include a (substituted) pyridine compound represented by the following formula (1):

[Chem. 5]

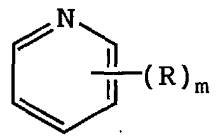

(1)

wherein R represents an alkyl or alkoxy group having from 1 to 5 carbon atoms, which may be substituted by a hydroxyl group or a halogen atom, or a halogen atom, m represents an integer of 0 to 5, and when m is 2 or more, the plurality of R may be the same or different.

Examples of the non-aromatic nitrogen-containing heterocyclic compound include a 1-(substituted)alkylpyrrolidine compound represented by the following formula (2), a 1-(substituted)alkylpiperidine compound represented by formula (3) and a 1,4-di(substituted)alkylpiperazine compound represented by formula (4).

[Chem. 6]

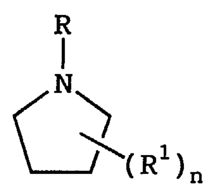

(2)

wherein R represents an alkyl group having from 1 to 5 carbon atoms, which may be substituted by a hydroxyl group or a halogen atom, $R^1$ represents a hydroxyl group or an alkyl or alkoxy group having from 1 to 5 carbon atoms, which may be substituted by a hydroxyl group, and n represents an integer of 0 to 2;

[Chem. 7]

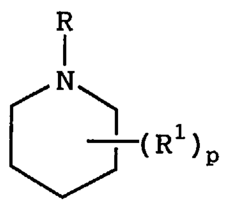

(3)

wherein R represents an alkyl group having from 1 to 5 carbon atoms, which may be substituted by a hydroxyl group or a halogen atom, $R^1$ represents a hydroxyl group or an alkyl or alkoxy group having from 1 to 5 carbon atoms, which may be substituted by a hydroxyl group, and p represents an integer of 0 to 2;

[Chem. 8]

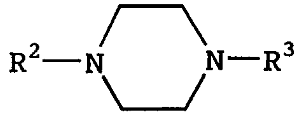

(4)

wherein $R^2$ and $R^3$ may be the same or different and each represents a hydrogen atom or an alkyl group having from

1 to 5 carbon atoms, which may be substituted by a hydroxyl group or a halogen atom, provided that $R^2$ and $R^3$ are not a hydrogen atom at the same time).

Specific examples of the aromatic nitrogen-containing heterocyclic compound include pyridine, 2-methylpyridine, 3-methylpyridine, 4-methylpyridine, 2-hydroxy-4-methylpyridine, 2-hydroxy-6-methylpyridine, 2-hydroxypyridine, 3-hydroxypyridine and 4-hydroxypyridine.

The nitrogen-containing heterocyclic ring of the non-aromatic nitrogen-containing heterocyclic compound can contain organochemically allowable oxygen or sulfur in place of carbon. Examples thereof include a compound represented by formula (5):

[Chem. 9]

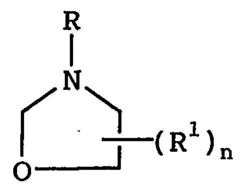

(5)

a compound represented by formula (6):

[Chem. 10]

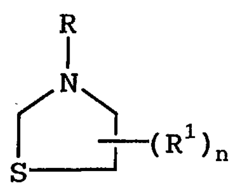

(6)

a compound represented by formula (7):

[Chem. 11]

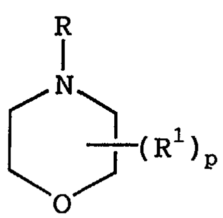

(7)

and a compound represented by formula (8):

[Chem. 11]

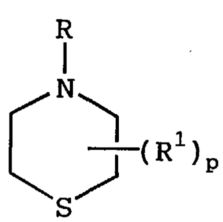

(8)

(wherein R, $R^1$, n and p have the same meanings as above).

Specific examples of the non-aromatic nitrogen-containing heterocyclic compound include 1-methylpyrrolidine, 1-ethylpyrrolidine, 1-methylpiperidine, 1-ethylpiperidine, 1-(2-hydroxyethyl)piperidine, 1-(hydroxymethyl)piperidine, 1-(2-hydroxyethyl)pyrrolidine, 2-(2-hydroxyethyl)-1-methylpyrrolidine, 3-hydroxy-1-methylpiperidine, 4-hydroxy-1-methylpiperidine, 4-chloro-1-methylpiperidine, 1-(2-chloroethyl)piperidine, 1-(2-chloroethyl)pyrrolidine, 1-methylpiperazine, 1-ethylpiperazine, 1-methyl-2-(hydroxyethyl)morpholine and 1,4-dimethylpiperazine.

(B) Anion exchanger and production method thereof

The amount of the anion exchange group introduced is preferably from 4 to 200 μeq/g, more preferably from 8 to 50 μeq/g.

The form of the packing material manufactured by introducing the ion exchange group includes an alkali-resistant porous chemical bond-type ion exchanger and a pellicular-type ion exchanger.

(1) Porous chemical bond-type ion exchanger

In the porous chemical bond-type ion exchanger which is preferably used in the present invention, the above-described nitrogen-containing heterocyclic compound is bonded to an alkali-resistant polymer through a spacer to produce an ion exchange group.

A porous polymer used as a substrate of the porous chemical bond-type ion exchanger is not particularly limited insofar as the polymer has resistance against alkali. Examples of the polymer include a polyvinyl alcohol-type copolymer and a styrene/divinylbenzene-type copolymer.

A spacer molecule having a group capable of bonding to a tertiary heterocyclic amine compound is bonded to this alkali-resistant porous polymer and further, a tertiary heterocyclic amine compound is reacted therewith to produce an amine exchange group.

The spacer molecule provides an intervention of multiple atoms, usually 3 to 20 atoms, between the substrate surface and the ion exchange group. The spacer molecule is bonded to the alkali-resistant porous polymer at one end and to the ion exchange group at the another end, as a result, this molecule acts as a spacer for elongating the distance between the substrate and the ion exchange group, and has a function of preventing the ion and the substrate from interfering with each other and also preventing diffusion of peaks.

The spacer molecule is preferably a compound containing a glycidyl group which bonds to a tertiary heterocyclic amine compound. Specific examples thereof include epichlorohydrin, 1,4-butanediol diglycidyl ether, ethylene glycol diglycidyl ether and glycerol glycidyl ether.

(2) Production method of porous chemical bond-type ion exchanger.

The bond between the spacer molecule and the alkali-resistant porous polymer may be any insofar as the bond is not cleaved under the pH condition used for the analysis of anions.

The production method is not particularly limited, however, for example, the porous chemical bond-type ion exchanger can be produced by a method of incorporating an ester bond into an alkali-resistant porous polymer, saponifying and thereby converting it into a hydroxyl group, and reacting the polymer with a diglycidyl compound containing two or more diglycidyl groups as a spacer molecule within the same molecule. As one example, the case where 1-methylpiperidine is introduced into the hydroxyl group of the substrate through the spacer 1,4-butanediol diglycidyl ether is schematically shown below.

[Chem. 13]

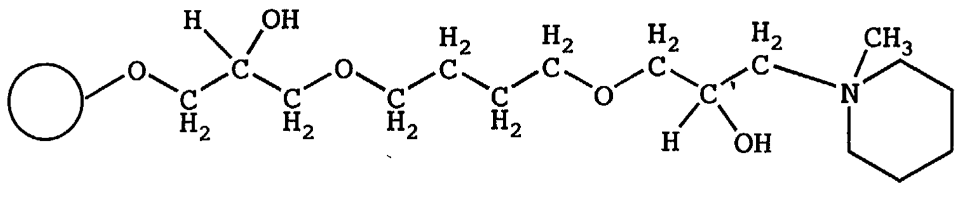

The production method is described in greater detail by referring to an alkali-resistant polyvinyl alcohol-type copolymer as an example. A copolymer of a carboxylic acid vinyl ester and a crosslinkable monomer having an isocyanurate ring are saponified and thereby the ester groups of the copolymer are partially converted into a hydroxyl group. By this conversion, the substrate is elevated in the hydrophilicity and prevented from the interference with ion. At the same

time, the hydroxyl group works out to an active site necessary for the reaction with a spacer molecule. With this copolymer, a compound containing two or more glycidyl groups within the same molecule, such as 1,4-butanediol diglycidyl ether is reacted.

For satisfactorily introducing the glycidyl group-containing group which is reacted with a tertiary heterocyclic amine, the saponification is preferably performed such that the hydroxyl group is present in an amount of at least 0.5 meq/g to 5 meq/g, preferably from 1.0 to 3 meq/g. If the amount of the hydroxyl group is less than 0.5 meq/g, the glycidyl group-containing group cannot be introduced in a sufficiently large amount, whereas if it exceeds 5 meq/g, the substrate decreases in the strength and this disadvantageously makes it difficult to improve the performance of the column by reducing the particle size of the substrate.

The amount of the hydroxyl group is determined by reacting a hydroxyl group with an acetic anhydride and measuring the amount of the acetic anhydride consumed or the change in the weight after the reaction. At this time, in the case where the functional group of the substrate also reacts, the functional group is protected and then, the amount of the hydroxyl group is determined by the above-described method. The amount of the hydroxyl group at the time of reacting 1 g of dry substrate with 1 mmol of acetic anhydride is defined as 1 mmol/g.

The carboxylic acid vinyl ester which is preferably used in this method is a compound having one or more polymerizable carboxylic acid vinyl ester group. Examples thereof include vinyl acetate, vinyl propionate, vinyl butyrate, vinyl valerate and vinyl pivalate. These are used individually or in combination of two or more thereof. Among these, preferred are vinyl acetate and vinyl propionate which are hydrophilic and facilitated in the polymerization and saponification.

Suitable examples of the isocyanurate-type crosslinking monomer include cross-linking monomers having an isocyanurate ring represented by the following formula:

[Chem. 14]

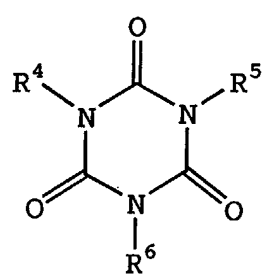

(wherein $R^4$, $R^5$ and $R^6$ each independently represents $-CH_2CH=CH_2$, $-CH_2-C\equiv CH$ or $-CH_2-C(CH_3)=CH_2$). Among these, triallyl cyanurate where $R^4$, $R^5$ and $R^6$ all are $-CH_2CH=CH_2$ is preferred as a crosslinking agent because of its good copolymerizability with vinyl acetate and high stability against the saponification.

The increase in the mass after the glycidyl compound reaction is from 103 to 140 assuming that the mass of the polyvinyl alcohol-type copolymer is 100. If the increase in the mass is less than 103, the resistance against alkali is not sufficiently high and this is not preferred, whereas if the increase in the mass exceeds 140, soft particles or occurrence of association among particles may disadvantageously result. The increase in the mass is preferably from 104 to 135, more preferably from 105 to 125.

The anion exchanger obtained by the above-described method is a porous particle. The pore size of the porous particle is from 50 to 300 Å, preferably from 50 to 150 Å, more preferably from 50 to 100 Å. If the pore size is less than 50 Å, the glycidyl group-containing group cannot be introduced into the inside of pores and this is not preferred, whereas if it exceeds 300 Å, the strength of the particle disadvantageously decreases. The pore size is controlled by a method commonly used for the packing material used in high-performance liquid chromatography.

The pore size may be determined by the reverse size exclusion method or BET (Brunauer-Emmett-Teller) method described in J. Chromatogr., 387, 65 (1987), however, in the present invention, unless otherwise indicated, the average pore size is determined according to the method described in Angew.Chem. Int. Ed. Engl., 17. 901-908 (1978).

In the measurement, particles to be measured are filled in the column, the column is connected with an HPLC apparatus, THF is flown as an eluent, and the retention capacity is measured for a plurality of standard polystyrenes and benzenes having a molecular weight over a wide range. The results obtained are plotted on a graph where the molecular weight M (logarithmic scale is preferred because of easy viewing) and the retention capacity (ml) are graduated on the axis Y and the axis X, respectively. The curve drawn by smoothly connecting the thus-plotted points is called a calibration curve. From the calibration curve, exclusion limit points ($V_1$, $M_1$) are determined by an ordinary

method and using these points and the measuring point ($V_2$, 78) of benzene, a straight line $X=(V_1+V_2)/2$ is drawn on the graph. On the coordinate Y, $M_m$ at the node (called average pore point) between the straight line and the calibration curve is read and the value obtained is substituted to the following formula (X) equivalent to the empirical formula (11) described in the above-described publication, page 905, whereby the average pore size $\phi_m$ [Å] is calculated.

[Eq. 2]

$$\phi_m[\text{Å}] = 0.62 \times (M_m)^{0.59} \qquad [X]$$

The "average pore point" is used and defined by the present inventors. The average pore point means a point when assuming that the entire pore volume is 100%, the integrated volume from the minimum volume (a size where benzene is just fitted) reaches 50%. The above-described equation is used for converting the standard polystyrene-equivalent molecular weight into the diameter of a pore for allowing just fitting thereof.

(3) Pellicular-type ion exchanger

The pellicular-type ion exchanger is a particle obtained by coating the surface of a core particle with a latex having introduced thereinto an ion exchange group. Examples of the core particle include sulfonated polystyrene.

The anion exchanger of the present invention suitably has a particle size of 1 to 30 μm, preferably from 2 to 20 μm, and in the case of porous chemical bond-type ion exchanger, more preferably from 2 to 10 μm. In the pellicular-type ion exchanger, the particle size of the resin is usually on the order of 5 t 15 μm. If the particle size of the anion exchanger exceeds 30 μm, the theoretical plate number of the column disadvantageously decreases, whereas if the particle size is less than 1 μm, the column pressure excessively elevates and the packing becomes extremely difficult.

In the present invention, the particle size is measured by a Coulter counter.

(C) Column for ion chromatography

The anion exchanger of the present invention is packed into a column for ion chromatography in accordance with a known packing method such as slurry method. The column according to the present invention has alkali resistance and is used as a high-sensitive column for suppressor-system ion chromatography.

The column using the anion exchanger according to the present invention is stable against the eluent (e.g., a mixed solution of sodium carbonate and sodium hydrogencarbonate, a boric acid buffer, an aqueous sodium hydroxide solution, an aqueous potassium hydroxide solution) used in the suppressor-system ion chromatography. This column is useful for the use in combination with an alkaline eluent having a pH of 9 or more, more preferably from 9 to 13. Furthermore, this column is useful for the case where the column is used in combination with a hydroxide-type eluent containing hydroxide ion as anion.

(D) Method for measuring anions

The method for measuring anions of the present invention can be performed in accordance with conventional suppressor-system ion chromatography.

Even in the case of using a hydroxide-type eluent which must heretofore rely on the gradient method or a method using a high-concentration solution, since an isocratic condition at a constant concentration and an eluent in a low concentration of 20 mM or less can be used, a special measuring apparatus or a special adjustment of concentration can be dispensed with and at the same time, a high voltage needs not be applied to the suppressor, so that the total measuring cost can be reduced.

As such, when the column used for suppressor-system ion chromatography is packed with the anion exchanger of the present invention, good separation of main inorganic anions (e.g., phosphate ion, fluoride ion, chloride ion, nitrite ion, bromide ion, nitrate ion, sulfate ion) can be attained by appropriately selecting the concentration of the eluent not only in the case of using a carbonic acid-type eluent or a boric acid-type eluent but also when a hydroxide-type eluent is used.

The method for measuring anions according to the present invention can satisfactorily separate halogen oxide ions (e.g., bromate ion, chlorite ion, chlorate ion) simultaneously with main anions (e.g., phosphate ion, fluoride ion, chloride ion, nitrite ion, bromide ion, nitrate ion, sulfate ion). More specifically, even when the above-described ions are analyzed at the same time, the separation degree of chlorite ion and bromate ion and the separation degree of chlorate ion and bromide ion both can be 1.5 or more in the measurement. In the case of simultaneously analyzing

halogen oxide ion, a suppressor may or may not be used.

In the method for measuring anions according to the present invention, the eluent which can be used for the analysis of halogen oxide ions is not particularly limited and, needless to say about a carbonic acid buffer, a hydroxide-type eluent such as potassium hydroxide and sodium hydroxide may be used in the case of suppressor system. In the case of non-suppressor system, an eluent obtained by adjusting an organic acid such as p-hydroxybenzoic acid and phthalic acid to a pH in the region from weak acid to the vicinity of neutral may be used.

Accordingly, the method for measuring anions of the present invention is useful for the analysis of trace components in the environment, such as anions in air, water (e.g., river water, tap water, spa water, limnetic water, drainage) and soil extract solution; the analysis of food and fertilizer; analysis of anions in cosmetic starting materials; the analysis of anions in coating raw materials, coating material or surface treating solution; the analysis of ultrapure water, mixed acid, air, lead frame or wafer in the semiconductor field; the quality control in the pharmaceutical field; and the analysis of circulating water, cooling water or the like at the electric power plant. The method for measuring anions of the present invention is also useful for the analysis of water subjected to an advanced water purification treatment and containing halogen oxide ions as a by-product of the treatment.

[Examples]

The present invention is described in greater detail below by referring to the Examples and Comparative Examples. These are mere exemplification and the present invention is by no means limited thereto.

(Example 1)

A polyvinyl alcohol-type polymer produced by the following method was used as a substrate resin into which an anion exchange group is introduced. A uniformly mixed solution containing 100 g of vinyl acetate, 180 g of triallyl isocyanurate, 150 g of butyl acetate and 10 g of 2,2-azobisisobutyronitrile, and 1,400 mL of water having dissolved therein a small amount of polyvinyl alcohol and sodium phosphate were charged into a 5 L-volume three-neck flask equipped with a reflux condenser and the resulting mixed solution was stirred for 10 minutes. Subsequently, while stirring under nitrogen stream, polymerization was performed at 60°C for 16 hours to obtain a particulate polymer. This polymer was filtrated, washed, extracted with acetone and then dried.

The obtained polymer was charged together with 3 L of an aqueous 1N sodium hydroxide solution (NaOH) into a 5 L-volume three-neck flask equipped with a reflux condenser, a nitrogen inlet tube and a stirrer, and saponified while stirring at 15°C for 20 hours under nitrogen stream. The resulting polymer was filtered, washed and dried. In the polyvinyl alcohol polymer obtained by the saponification, the density of hydroxyl group was 2.1 meq/g. Using this as a substrate, an anion exchanger was manufactured according to the following procedure.

Into a 1 L-volume three-neck flask equipped with a nitrogen inlet tube and a stirrer, 100 g of the dry polymer obtained above, 300 g of 1,4-butanediol diglycidyl ether (hereinafter simply referred to as "1,4-BGE"), 300 mL of dimethyl sulfoxide and 65 mL of an aqueous 30 wt% sodium hydroxide solution were charged. The resulting mixture was stirred at 35°C for 12 hours under nitrogen stream to introduce a glycidyl group-containing group into the polymer substrate. After the introduction, the polymer was washed with dimethyl sulfoxide and water and then dried by a vacuum dryer. The mass of the dried polymer was 110 g, thus, the increment from the original substrate was 10 %.

Into a 1 L-volume three-neck flask equipped with a nitrogen inlet tube and a stirrer, 100 g of the polymer having introduced thereinto a glycidyl group-containing group, 4 g of 1-methylpiperidine and 500 mL of water were charged. The resulting solution was stirred at 40°C for 1 hour to introduce a tertiary heterocyclic amine, thereby manufacturing an anion exchanger. This anion exchanger was washed with 1N hydrochloric acid and an aqueous 1N sodium hydroxide solution while allowing an intervention of water washing. Thereafter, the anion exchanger was immersed in an aqueous 1N sodium hydroxide solution and treated at 60°C for 5 hours, followed by water washing and drying. The thus-obtained anion exchanger had an average particle size of 5 μm and an ion exchange capacity of about 20 μeq/g.

The anion exchanger obtained above was packed into a polyether ether ketone resin (PEEK)-made column having an inside diameter of 4.0 mm and a length of 250 mm to prepare an anion exchange column. Using DX-320 (manufactured by Dionex Corporation) equipped with a suppressor as the ion chromatograph, 25 μl of an aqueous solution containing 2 mg/L of $F^-$, 3 mg/L of $Cl^-$, 5 mg/L of $NO_2^-$, 10 mg/L of $Br^-$, 10 mg/L of $NO_3^-$, 15 mg/L of $SO_4^{2-}$ and 15 mg/L of $PO_4^{3-}$ was injected as a standard solution into the ion chromatograph while flowing an aqueous 15 mM sodium hydroxide solution as the eluent at 1.0 ml/min at a column temperature of 35°C. Fig. 2 shows the chromatogram obtained.

Example 2:

Into the polyvinyl alcohol-type substrate resin prepared as a substrate in Example 1, 1,4-BGE was introduced according to the same formulation as in Example 1.

Into a 1 L-volume three-neck flask equipped with a nitrogen inlet tube and a stirrer, 100 g of the polymer having introduced thereinto a glycidyl group-containing group, 1 g of 1-methylpyrrolidine and 500 mL of water were charged. The resulting solution was stirred at 40°C for 1 hour to introduce a tertiary heterocyclic amine, thereby manufacturing an anion exchanger. This anion exchanger was washed with 1N hydrochloric acid and an aqueous 1N sodium hydroxide solution while allowing an intervention of water washing. Thereafter, the anion exchanger was immersed in an aqueous 1N sodium hydroxide solution and treated at 60°C for 5 hours, followed by water washing and drying. The thus-obtained anion exchanger had an average particle size of 5 μm and an ion exchange capacity of about 20 μeq/g.

The anion exchanger obtained above was packed into the same column as in Example 1 and measured in the same manner as in Example 1.

Example 3:

Into the polyvinyl alcohol-type substrate resin prepared as a substrate in Example 1, 1,4-BGE was introduced according to the same formulation as in Example 1.

Into a 1 L-volume three-neck flask equipped with a nitrogen inlet tube and a stirrer, 100 g of the polymer having introduced thereinto a glycidyl group-containing group, 10 g of pyridine and 500 mL of water were charged. The resulting solution was stirred at 40°C for 1 hour to introduce a tertiary heterocyclic amine, thereby manufacturing an anion exchanger. This anion exchanger was washed with 1N hydrochloric acid and an aqueous 1N sodium hydroxide solution while allowing an intervention of water washing. Thereafter, the anion exchanger was immersed in an aqueous 1N sodium hydroxide solution and treated at 60°C for 5 hours, followed by water washing and drying. The thus-obtained anion exchanger had an average particle size of 5 μm and an ion exchange capacity of about 20 μeq/g.

The anion exchanger obtained above was packed into the same column as in Example 1 and measured in the same manner as in Example 1.

Comparative Example 1:

Into the polyvinyl alcohol-type substrate resin prepared as a substrate in Example 1, 1,4-BGE was introduced according to the same formulation as in Example 1.

Into a 1 L-volume three-neck flask equipped with a nitrogen inlet tube and a stirrer, 100 g of the polymer having introduced thereinto a glycidyl group-containing group, 75 mL of a 1% aqueous trimethylamine solution and 500 mL of water were charged. The resulting solution was stirred at 40°C for 1 hour to introduce an aliphatic tertiary amine, thereby manufacturing an anion exchanger. This anion exchanger was washed with 1N hydrochloric acid and an aqueous 1N sodium hydroxide solution while allowing an intervention of water washing. Thereafter, the anion exchanger was immersed in an aqueous 1N sodium hydroxide solution and treated at 60°C for 5 hours, followed by water washing and drying. The thus-obtained anion exchanger had an average particle size of 5 μm and an ion exchange capacity of about 20 μeq/g.

The anion exchanger obtained above was packed into the same column as in Example 1 and measured in the same manner as in Example 1.

Comparative Example 2:

Into the polyvinyl alcohol-type substrate resin prepared as a substrate in Example 1, 1,4-BGE was introduced according to the same formulation as in Example 1.

Into a 1 L-volume three-neck flask equipped with a nitrogen inlet tube and a stirrer, 100 g of the polymer having introduced thereinto a glycidyl group-containing group, 150 mL of a 1% aqueous triethylamine solution and 500 mL of water were charged. The resulting solution was stirred at 40°C for 1 hour to introduce an aliphatic tertiary amine, thereby manufacturing an anion exchanger. This anion exchanger was washed with 1N hydrochloric acid and an aqueous 1N sodium hydroxide solution while allowing an intervention of water washing. Thereafter, the anion exchanger was immersed in an aqueous 1N sodium hydroxide solution and treated at 60°C for 5 hours, followed by water washing and drying. The thus-obtained anion exchanger had an average particle size of 5 μm and an ion exchange capacity of about 20 μeq/g.

The anion exchanger obtained above was packed into the same column as in Example 1 and measured in the same manner as in Example 1.

Example 4:

A styrene/divinylbenzene-type resin produced by the following method was used as a substrate resin into which an ion exchange group is introduced. A uniformly mixed solution containing 105 g of 4-acetoxystyrene, 70 g of m-divinylbenzene, 75 g of toluene and 3.5 g of 2,2-azobisisobutylonitrile were suspended in 1,250 mL of water having dissolved therein 10% polyvinyl alcohol and homogenized. Subsequently, the homogenized solution was transferred to a 2 L-volume separable flask and polymerized at 70°C for 6 hours to obtain a particulate polymer. This polymer was filtrated, washed with water and acetone, air-dried and then classified by air separation to obtain particles of 3 to 6 μm.

In 1,500 mL of methanol, 150 g of the dry polymer obtained above was suspended, a solution obtained by dissolving 150 g of KOH in 1,500 mL of a 50% methanol solution was added thereto, and the polymer solution was stirred and thereby saponified at 50°C for 6 hours. The resulting polymer was washed with water and acetone and then dried to recover 135 g of the polymer.

Into a 2 L-volume three-neck flask equipped with a nitrogen inlet tube and a stirrer, 100 g of the dry polymer obtained above, 400 g of 1,4-BGE, 300 mL of dimethyl sulfoxide and 65 mL of water were charged. The resulting mixture was stirred at 35°C for 16 hours under nitrogen stream to introduce a glycidyl group-containing group into the polymer substrate. After the introduction, the polymer was washed with dimethyl sulfoxide and water, and then dried by a vacuum dryer. The mass of the dried polymer was 105 g, thus, the increment from the original substrate was 5%.

Into a 1 L-volume three-neck flask equipped with a nitrogen inlet tube and a stirrer, 100 g of the polymer having introduced thereinto a glycidyl group-containing group, 8 g of 1-methylpiperidine and 500 mL of water were charged. The resulting solution was stirred at 40°C for 4 hours to introduce a tertiary heterocyclic amine, thereby manufacturing an anion exchanger. This anion exchanger was washed according to the same formulation as in Example 1 to obtain an anion exchanger.

The anion exchanger obtained above was packed into the same column as in Example 1 and measured in the same manner as in Example 1.

Comparative Example 3:

Using a column (a pellicular-type ion exchanger having introduced thereinto a tertiary alkanolamine) commercially available at present as a column for a hydroxide-type eluent, the measurement was performed in the same mariner as in Example 1.

Evaluation:

As for Examples 1 to 4 and Comparative Examples 1 to 3, the kind of tertiary amine introduced, the difference in the retention time between the fluoride ion and the water dip, the separation degree of chloride ion and nitrite ion, and the retention time of phosphate ion are shown in Table 1. The difference in the retention time between fluoride ion and water dip was determined by using respective peaks as the retention time. The separation degree R of chloride ion and nitrite ion was determined according to the following formula:

[Eq. 3]

$$R=2\times(t_2-t_1)/(w_1+w_2)$$

wherein $t_1$ and $t_2$ represent respective retention times and $w_1$ and $w_2$ represent respective peak widths.

[Table 1]

| | Tertiary Amine Introduced | Difference in Retention Time between Fluoride Ion and Water Dip (min) | Separation Degree of Chloride Ion and Nitrite Ion (R) | Retention Time of Phosphate Ion (min) |
|---|---|---|---|---|
| Example 1 | 1-methylpiperidine | 1.00 | 5.2 | 15.6 |
| Example 2 | 1-methylpyrrolidine | 0.95 | 5.0 | 15.2 |
| Example 3 | pyridine | 0.90 | 5.0 | 15.8 |

[Table 1] (continued)

| | Tertiary Amine Introduced | Difference in Retention Time between Fluoride Ion and Water Dip (min) | Separation Degree of Chloride Ion and Nitrite Ion (R) | Retention Time of Phosphate Ion (min) |
|---|---|---|---|---|
| Example 4 | 1-methylpiperidine | 0.85 | 5.5 | 19.6 |
| Comparative Example 1 | alkanolamine | immeasurable due to overlapping of peaks | 1.8 | 34.0 |
| Comparative Example 2 | trimethylamine | 0.79 | 3.4 | 16.0 |
| Comparative Example 3 | triethylamine | 0.68 | 3.2 | 14.1 |

In the case of the column used in Comparative Example 1, which is commercially available at present, the retention time of phosphate ion is extremely redundant and 30 minutes or more, nevertheless, the fluoride ion is partially overlapped with water dip and moreover, the separation of chloride ion and sulfite ion is not satisfied. On the other hand, in the case of the column for suppressor-system ion chromatography using the anion exchanger manufactured in Examples 1, 2 and 3 by introducing a tertiary heterocyclic amine according to the present invention, even when the retention time of phosphate ion which is difficult to elute is set to 14 to 16 minutes, the fluoride ion can be satisfactorily separated from water dip and at the same time, the separation of chloride ion and nitrite ion can be satisfactorily attained. This reveals significant improvement as compared with anion exchangers of Comparative Examples 2 and 3 where an acyclic tertiary amine was introduced. Furthermore, as seen from Example 4, the substrate resin is not limited to the polyvinyl alcohol-type resin but the introduction of a heterocyclic amine is effective also for other resins.

Example 5:

A polyvinyl alcohol-type polymer produced by the following method was used as a substrate resin into which an ion exchange group is introduced. A uniformly mixed solution comprising 100 g of vinyl acetate, 180 g of triallyl isocyanurate, 150 g of butyl acetate and 10 g of 2,2-azobisisobutylonitrile, and 1,400 mL of water having dissolved therein a small amount of polyvinyl alcohol and sodium phosphate were charged into a 5 L-volume three-neck flask equipped with a reflux condenser and the resulting mixed solution was stirred for 10 minutes. Subsequently, while stirring under nitrogen stream, polymerization was performed at 60°C for 16 hours to obtain a particulate polymer. This polymer was filtrated, washed, extracted with acetone and then dried.

The obtained polymer was charged together with 3 L of an aqueous 1N sodium hydroxide (NaOH) solution into a 5 L-volume three-neck flask equipped with a reflux condenser, a nitrogen inlet tube and a stirrer, and saponified while stirring at 15°C for 20 hours under nitrogen stream. The resulting polymer was filtered, washed and dried. In the polyvinyl alcohol copolymer obtained by the saponification, the density of hydroxyl group was 2.1 meq/g. Using this as a substrate, an anion exchanger was manufactured according to the following procedure.

Into 1 L-volume three-neck flask equipped with a nitrogen inlet tube and a stirrer, 100 g of the dry polymer obtained above, 300 g of 1,4-BGE, 300 mL of dimethyl sulfoxide and 65 mL of an aqueous 30 wt% sodium hydroxide were charged. The resulting mixture was stirred at 35°C for 12 hours under nitrogen stream to introduce a glycidyl group-containing group into the polymer substrate. After the introduction, the polymer was washed with dimethyl sulfoxide and water, and then dried by a vacuum dryer. The mass of the dried polymer was 110 g, thus, the increment from the original substrate was 10%.

Into a 1 L-volume three-neck flask equipped with a nitrogen inlet tube and a stirrer, 100 g of the polymer having introduced thereinto a glycidyl group-containing group, 5 g of 1-methylpiperidine and 500 mL of water were charged. The resulting solution was stirred at 40°C for 2 hours to introduce a tertiary heterocyclic amine, thereby manufacturing an anion exchanger. This anion exchanger was washed with 1N hydrochloric acid and an aqueous 1N sodium hydroxide solution while allowing an intervention of water washing. Thereafter, the anion exchanger was immersed in an aqueous 1N sodium hydroxide solution and treated at 100°C for 20 hours, followed by water washing and drying. The thus-obtained anion exchanger had an average particle size of 5 μm and an ion exchange capacity of about 30 μeq/g.

The anion exchanger obtained above was packed into a polyether ether ketone resin (PEEK)-made column

having an inside diameter of 4.0 mm and a length of 250 mm to prepare an anion exchange column. Using 761 Compact IC (manufactured by Metrohm Ltd.) equipped with a suppressor as the ion chromatograph, 20 μl of an aqueous solution containing 2 mg/L of $F^-$, 10 mg/L of $ClO_2^-$, 10 mg/L of $BrO_3^-$, 3 mg/L of $Cl^-$, 5 mg/L of $NO_2^-$, 10 mg/L of $ClO_3^-$, 10 mg/L of $Br^-$, 10 mg/L of $NO_3^-$, 15 mg/L of $SO_4^{2-}$ and 15 mg/L of $PO_4^{3-}$ was injected as a standard solution into the ion chromatograph while flowing an aqueous 3 mM sodium carbonate solution as the eluent at 0.7 ml/min at a column temperature of 25°C. Fig. 3 shows the chromatogram obtained.

Example 6:

Into the polyvinyl alcohol-type substrate resin prepared as a substrate in Example 1, 1,4-BGE was introduced according to the same formulation as in Example 1.
Into a 1 L-volume three-neck flask equipped with a nitrogen inlet tube and a stirrer, 100 g of the polymer having introduced thereinto a glycidyl group-containing group, 1.5 g of 1-methylpyrrolidine and 500 mL of water were charged. The resulting solution was stirred at 40°C for 2 hour to introduce a tertiary heterocyclic amine, thereby manufacturing an anion exchanger. This anion exchanger was washed with 1N hydrochloric acid and an aqueous 1N sodium hydroxide solution while allowing an intervention of water washing. Thereafter, the anion exchanger was immersed in an aqueous 1N sodium hydroxide solution and treated at 100°C for 20 hours, followed by water washing and drying. The thus-obtained anion exchanger had an average particle size of 5 μm and an ion exchange capacity of about 30 μeq/g.
The anion exchanger obtained above was packed into the same column as in Example 5 and measured in the same manner as in Example 1.

Comparative Examples 4:

Into the polyvinyl alcohol-type substrate resin prepared as a substrate in Example 1, 1,4-BGE was introduced according to the same formulation as in Example 1.
Into a 1 L-volume three-neck flask equipped with a nitrogen inlet tube and a stirrer, 100 g of the polymer having introduced thereinto a glycidyl group-containing group, 100 mL of a 1% aqueous trimethylamine solution and 500 mL of water were charged. The resulting solution was stirred at 40°C for 2 hour to introduce an aliphatic tertiary amine, thereby manufacturing an anion exchanger. This anion exchanger was washed with 1N hydrochloric acid and an aqueous 1N sodium hydroxide solution while allowing an intervention of water washing. Thereafter, the anion exchanger was immersed in an aqueous 1N sodium hydroxide solution and treated at 100°C for 20 hours, followed by water washing and drying. The thus-obtained anion exchanger had an average particle size of 5 μm and an ion exchange capacity of about 30 μeq/g.
The anion exchanger obtained above was packed into the same column as in Example 5 and measured in the same manner as in Example 1.

Evaluation:

As for Examples 5 and 6 and Comparative Example 4, the kind of tertiary amine introduced, the separation degree of chlorite ion and bromate ion, the separation degree of chlorate ion and bromide ion, and the retention time of sulfate ion are shown in Table 2. The retention time of sulfate ion is shown to verify that three columns can be properly evaluated by agreeing the elution position of sulfate ion which is largest in the retention time. The degree R was determined according to the following formula:

[Eq. 4]

$$R=2\times(t_2-t_1) / (w_1+w_2)$$

wherein $w_1$ and $w_2$ represent respective peak widths, and $t_1$ and $t_2$ represent respective retention times.
The separation degree R is preferably 1.5 or more.

[Table 2]

| | Tertiary Amine Introduced | Separation Degree of Chlorite Ion and Bromate Ion (min) | Separation Degree of Chlorate Ion and Bromide Ion (R) | Retention Time of Sulfate Ion (min) |
|---|---|---|---|---|
| Example 5 | 1-methylpiperidine | 1.72 | 2.11 | 25.2 |
| Example 6 | 1-methylpyrrolidine | 1.74 | 1.55 | 25.5 |
| Comparative Example 4 | trimethylamine | 1.58 | 0.80 | 25.8 |

In the case of the conventional column for suppressor-system ion chromatography prepared in Comparative Example 4 where an anion exchanger manufactured by introducing a tertiary alkyl amine is used, the separation degree of chlorate ion and bromide ion was insufficiently 1.5 or less, whereas in the case of the column for suppressor-system ion chromatography according to the present invention prepared in Examples 5 and 6 where an anion exchanger manufactured by introducing a tertiary heterocyclic amine is used, the separation degree of chlorite ion and bromate ion and the separation degree of chlorate ion and bromide ion both are 1.5 or more and from this, it is understood that satisfactory separation can be attained. This reveals a significant improvement as compared with the anion exchanger manufactured by introducing an acyclic tertiary alkylamine in Comparative Example 4.

Fig. 3 shows a chromatogram of the analysis using the column produced in Example 5. It is seen that the fluoride ion can be satisfactorily separated from the water dip (a negative peak generated due to water in the sample), the carbonic acid dip can be separated from other ion peaks, and excellent properties of the porous chemical bond-type anion exchanger derived from a polyvinyl alcohol-type substrate can be reflected.

In this Example, a carbonic acid buffer was used as the eluent but the eluent which can be used for the analysis of halogen oxide ion is not limited thereto.

[Effects of the Invention]

The column for suppressor-system ion chromatography packed with the anion exchanger of the present invention can reduce the elution time of phosphate ion to 20 minutes or less under an isbcratic condition using a hydroxide-type eluent having a low concentration of 20 mM or less, can satisfactorily separate the fluoride ion which is difficult to hold, from a water dip and can satisfactorily separate chloride ion and nitrite ion, so that in the analysis using the above-described eluent, the measuring time can be shortened and the life of continuous regeneration-type ion exchange membrane suppressor can be prolonged.

The column for ion chromatography packed with the anion exchanger of the present invention can analyze the halogen oxide ions such as bromate ion, chlorite ion and chlorate ion, simultaneously with seven kinds of standard inorganic anions.

Accordingly, the present invention is useful in the field over a wide range, such as environment, food, agriculture, cosmetics, coating material, semiconductor, medical preparation and electric power. The present invention is particularly useful for the analysis of several ppb of nitrite ion in the presence of a dozen of ppm of chloride ion in tap water or the like or for the analysis of water containing halogen oxide ion generated as a by-product, for example, water subjected to advanced water purification.

[BRIEF DESCRIPTION OF THE DRAWINGS]

[Fig. 1]

Fig. 1 is a schematic view showing a fundamental structure of ion chromatography.

[Fig. 2]

Fig. 2 shows a chromatogram sampled by injecting a test aqueous solution containing seven kinds of standard ions into a separation column prepared by packing the ion exchanger of the present invention obtained in Example 1.

[Fig. 3]

Fig. 3 shows a chromatogram when halogen oxide ion is analyzed simultaneously with seven kinds of inorganic

anions by the measuring method of the present invention, obtained in Example 5.

[Description of Numerical References]

1 peak of fluoride ion
2 peak of chlorite ion
3 peak of bromate ion
4 peak of chloride ion
5 peak of nitrite ion
6 peak of chlorate ion
7 peak of bromide ion
8 peak of nitrate ion
9 peak of phosphate ion
10 peak of sulfate ion

## Claims

1. A method for measuring anions by suppressor-system or non-suppressor-system ion chromatography, comprising using a column for ion chromatography, which is packed with an alkali-resistant anion exchanger comprising porous polymer particles, in combination with an alkaline eluent, said porous polymer particles comprising an alkali-resistant polymer substrate having bonded thereto through a spacer a nitrogen-containing heterocyclic group having a quaternary ammonium structure which measurement is used for the measurement of halogen oxide ions.

2. The method of claim 1, wherein the alkaline eluent is a hydroxide eluent.

3. The method of claim 1 or claim 2, wherein the hydroxide-type eluent as the alkaline eluent is used under an isocratic condition at a concentration of 20 mM or less.

4. The method of any of the claims 1 to 3, wherein the halogen oxide ion is chlorite ion, chlorate ion and/or bromate ion.

5. The method of any of claims 1 to 4, wherein the halogen oxide ion is measured simultaneously with an anion selected from the group consisting of fluoride ion, chloride ion, nitrite ion, bromide ion, nitrate ion, sulfate ion and phosphate ion.

6. The method of any of the claims 1 to 5, wherein the separation degree of chlorite ion and bromate ion, and the separation degree of chlorate ion and bromide ion are 1.5 or more.

7. The method of any of claims 1 to 6, wherein in the porous polymer particles the nitrogen-containing heterocyclic group containing a quaternary ammonium structure is derived from an aromatic or non-aromatic heterocyclic compound.

8. The method of claim 7, wherein the nitrogen-containing heterocyclic compound is a compound selected from the group consisting of a pyridine compound represented by formula (1):

[1]

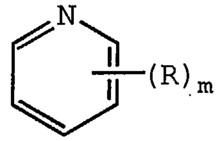

(1)

(wherein R represents an alkyl or alkoxy group having from 1 to 5 carbon atoms, which may be substituted by a hydroxyl group or a halogen atom, or a halogen atom, m represents an integer of 0 to 5, and when m is 2 or more,

the plurality of R may be the same or different), a 1-alkylpyrrolidine compound represented by formula (2):

[2]

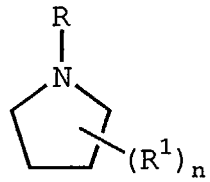

(2)

(wherein R represents an alkyl group having from 1 to 5 carbon atoms, which may be substituted by a hydroxyl group or a halogen atom, $R^1$ represents a hydroxyl group or an alkyl or alkoxy group having from 1 to 5 carbon atoms, which may be substituted by a hydroxyl group, and n represents an integer of 0 to 2), a 1-alkylpiperidine compound represented by formula (3) :

[3]

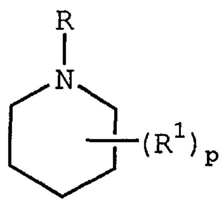

(3)

(wherein R represents an alkyl group having from 1 to 5 carbon atoms, which may be substituted by a hydroxyl group or a halogen atom, $R^1$ represents a hydroxyl group or an alkyl or alkoxy group having from 1 to 5 carbon atoms, which may be substituted by a hydroxyl group, and n represents an integer of 0 to 2), and a piperazine compound represented by formula (4) :

[4]

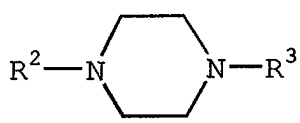

(4)

(wherein $R^2$ and $R^3$ may be the same or different and each independently represents a hydrogen atom or an alkyl group having from 1 to 5 carbon atoms, which may be substituted by a hydroxyl group or a halogen atom, provided that $R^2$ and $R^3$ are not a hydrogen atom at the same time).

**9.** The method of claim 8, wherein the nitrogen-containing heterocyclic compound is pyridine, 2-methylpyridine, 3-methylpyridine, 4-methylpyridine, 2-hydroxy-4-methylpyridine, 2-hydroxy-6-methylpyridine, 2-hydroxypyridine, 3-hydroxypyridine, 4-hydroxypyridine, 1-methylpyrrolidine, 1-ethylpyrrolidine, 1-methylpiperidine, 1-ethylpiperidine, 1-(2-hydroxyethyl)piperidine, 1-(hydroxymethyl)piperidine, 1-(2- hydroxyethylpyrrolidine, 2-(2-hydroxyethyl)-1-methylpyrrolidine, 3-hydroxy-1-methylpiperidine, 4-hydroxy-1-methylpiperidine, 4-chloro-1-methylpiperidine, 1-(2-chloroethyl)piperidine, 1-(2-chloroethyl)pyrrolidine, 1-methylpiperazine, 1-ethylpiperazine or 1,4-dimethylpiperazine.

**10.** The method of any of the claims 1 to 9, wherein the substrate of the porous polymer particle is selected from a polyvinyl alcohol-type copolymer and a styrene/divinylbenzene type copolymer, the spacer molecule connecting the substrate and the anion exchange group is a compound containing a glycidyl group, and the polymer is bonded to the spacer molecule through a bond incapable of cleaving under alkali conditions.

**11.** The method of any of the claims 1 to 10, wherein the average particle size of the porous particles is 1 to 30 µm.

**12.** The method of any of the claims 1 to 11, wherein the average pore size of the porous particles is 50 to 300 Å.

**13.** A method for measuring anions by suppressor-system or non-suppressor-system ion chromatography, comprising using a column for suppressor-system ion chromatography, which is packed with an alkali-resistant anion exchanger comprising porous polymer particles, in combination with an alkaline eluent, said porous polymer particles comprising an alkali-resistant polymer substrate having bonded thereto through a spacer a nitrogen-containing heterocyclic group having a quaternary ammonium structure which measurement is used for the measurement of halogen oxide ions,

wherein the alkali resistant anion exchanger is produced by a method which comprises bonding a spacer molecule containing a glycidyl group to an alkali-resistant polymer porous particle selected from a polyvinyl alcohol-type copolymer and a styrene/divinylbenzene-type copolymer through a bond incapable of cleaving under alkali conditions, and reacting the glycidyl group with a nitrogen-containing heterocyclic group to introduce an anion exchange group.

**14.** The method of claim 13, wherein the nitrogen-containing heterocyclic compound is selected from the group consisting of the nitrogen-containing heterocyclic compounds described in formula (2) or (3) above.

**15.** The method of claim 14, wherein a compound containing two or more glycidyl groups is reacted with a polyvinyl alcohol-type copolymer obtained by saponifying and thereby partially converting a copolymer of a carboxylic acid vinyl ester and an isocyanurate-type crosslinking monomer into a hydroxyl group, to introduce a glycidyl group-containing group such that the mass thereof after the reaction becomes from 103 to 140 assuming that the mass of the polyvinyl alcohol-type copolymer is 100, and the reaction product is reacted with a nitrogen-containing heterocyclic group.

**16.** The method of claim 15, wherein the saponification of the polyvinyl alcohol-type polymer is performed until from 0.5 to 5 meq/g of hydroxyl group is produced in the polymer.

FIG. 1

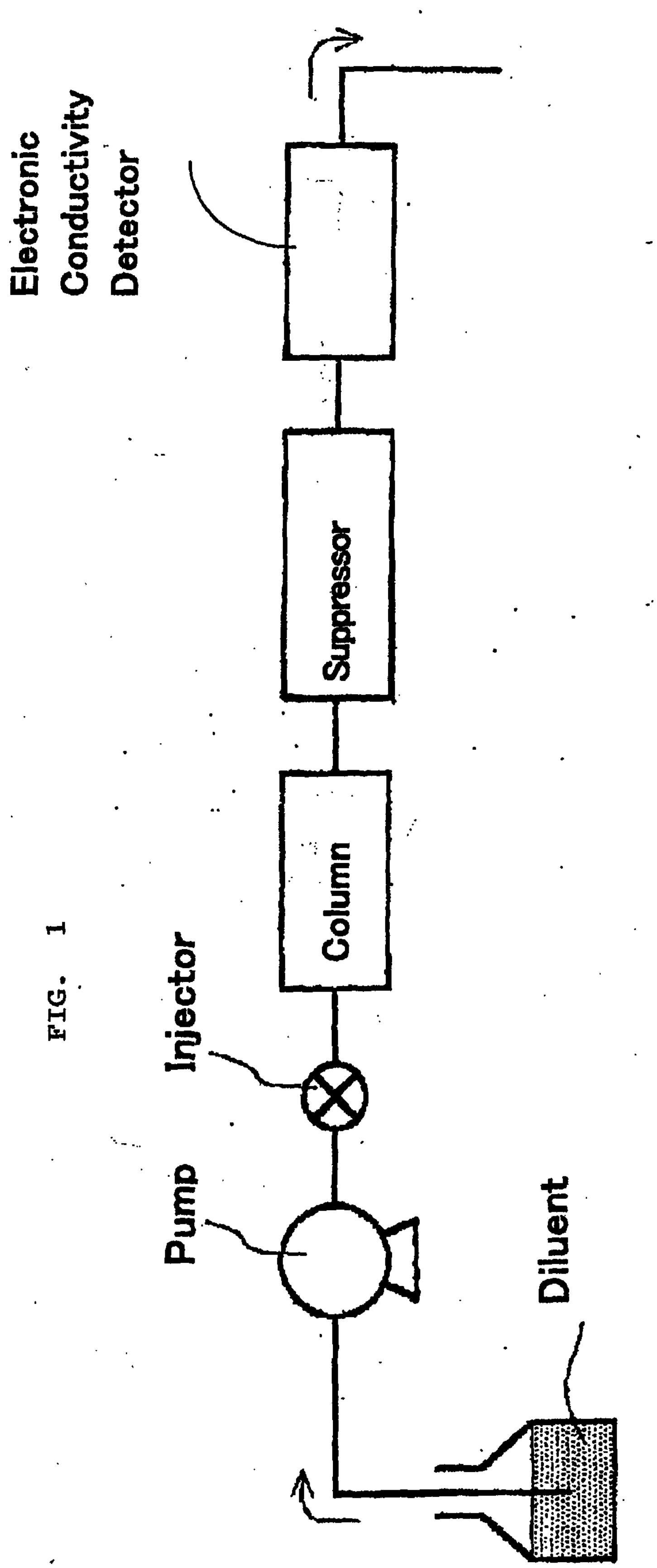
Electronic Conductivity Detector
Suppressor
Column
Injector
Pump
Diluent

FIG. 2

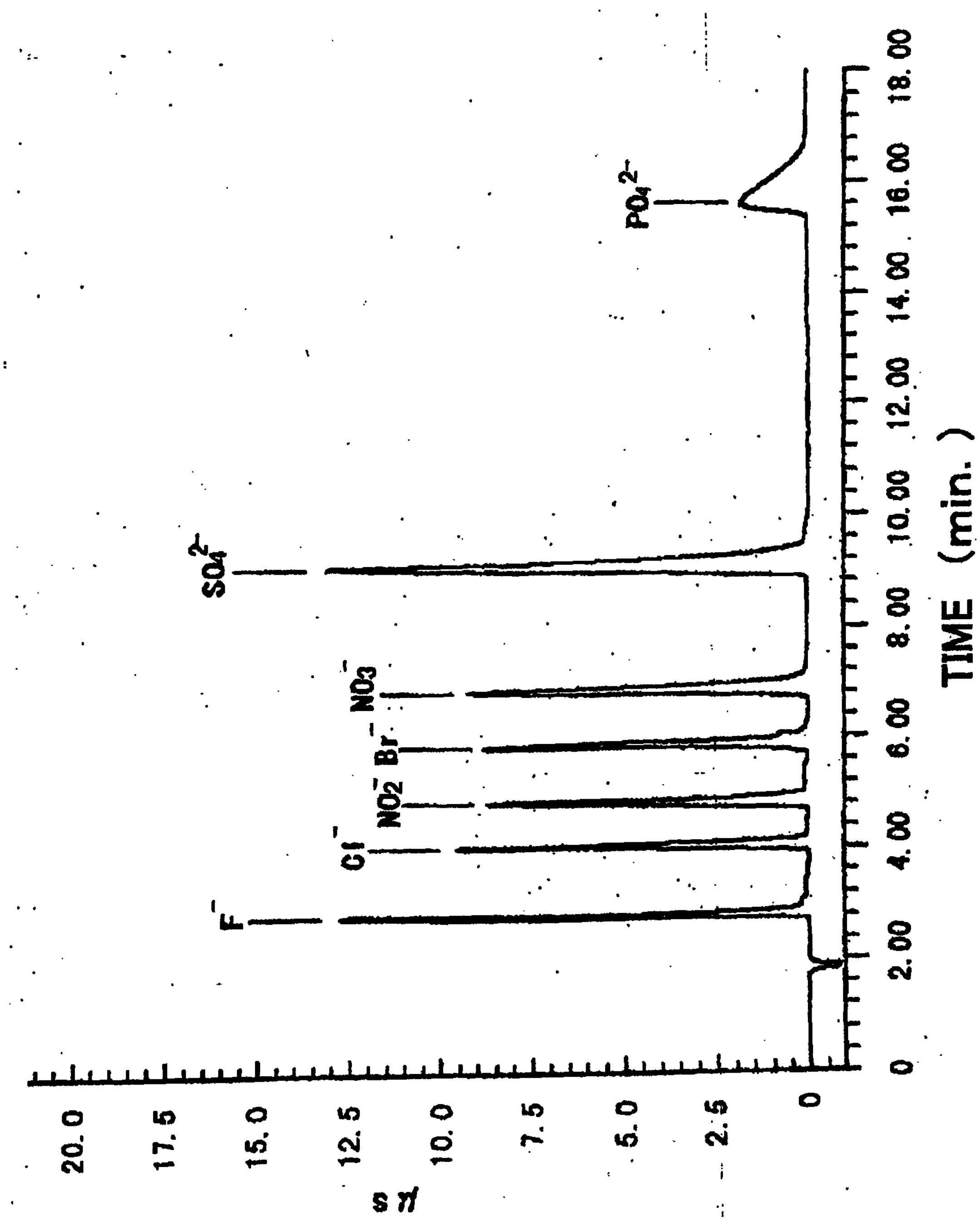
F⁻
Cl⁻
NO2⁻
Br⁻
NO3⁻
SO4 2-
PO4 2-
20.0
17.5
15.0
12.5
10.0
7.5
5.0
2.5
0
μS
0
2.00
4.00
6.00
8.00
10.00
12.00
14.00
16.00
18.00
TIME (min.)

FIG. 3

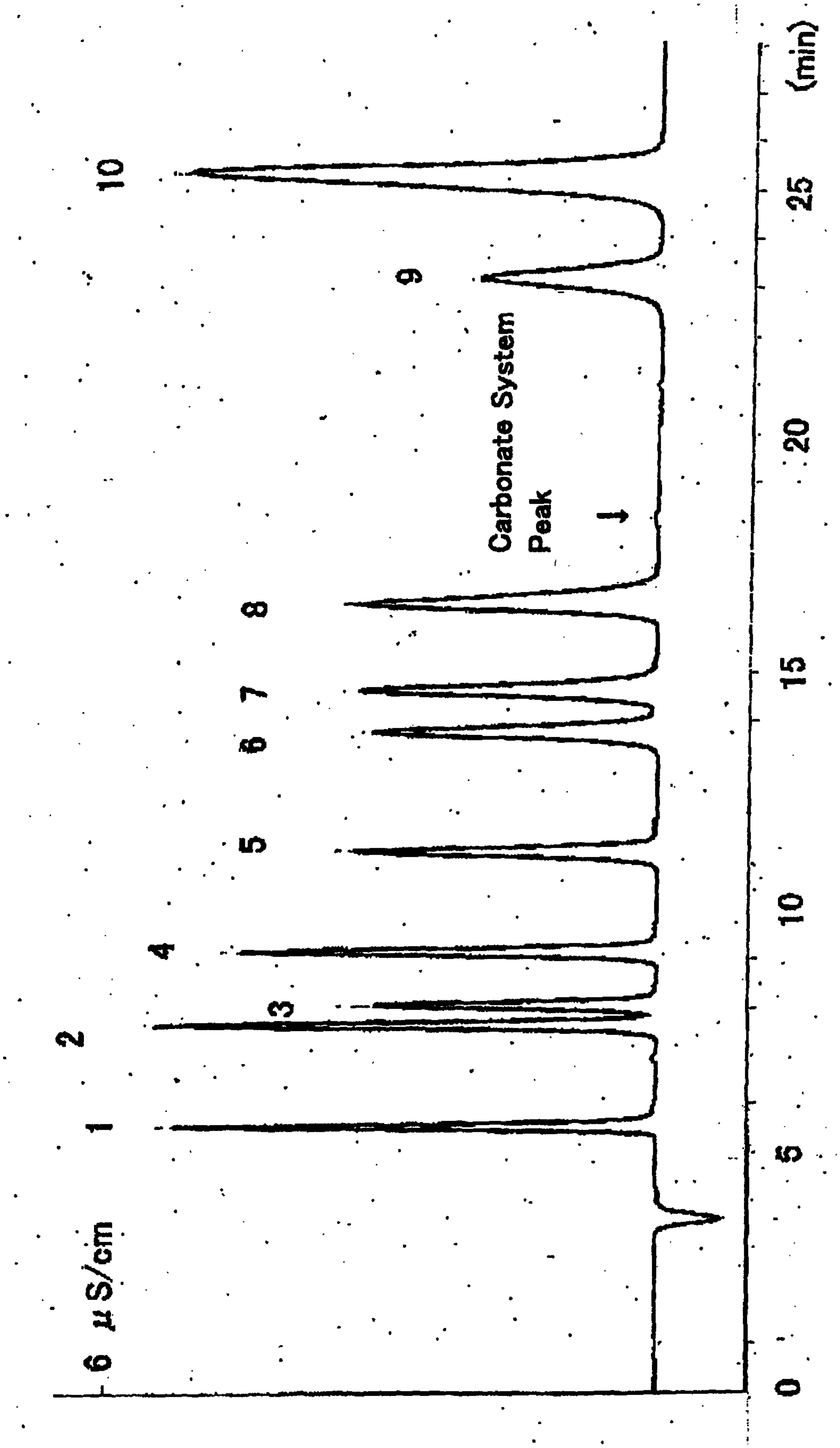

European Patent Office

# EUROPEAN SEARCH REPORT

Application Number
EP 01 12 1490

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | DATABASE WPI<br>Section Ch, Week 200132<br>Derwent Publications Ltd., London, GB;<br>Class A14, AN 2001-303888<br>XP002194777<br>& JP 2001 040032 A (SHOWA DENKO KK),<br>13 February 2001 (2001-02-13)<br>* abstract *<br>--- | 1 | C08F8/44 |
| Y | GB 2 034 328 A (KUREHA KAGAKU KOGYO KABUSHIKI KAISHA) 4 June 1980 (1980-06-04)<br>* page 1, line 41 - page 2, line 7 *<br>* page 2, line 18 - page 3, line 17 *<br>* page 4, line 1 - line 40; claims 1-8 *<br>--- | 1-16 | |
| Y | FR 2 333 005 A (SUMITOMO CHEMICAL CO., LTD.) 24 June 1977 (1977-06-24)<br>* page 3, line 22 - line 31 *<br>* page 5, line 12 - page 6, line 22; claims 1-24 *<br>--- | 1-16 | |
| Y | DATABASE WPI<br>Section Ch, Week 199722<br>Derwent Publications Ltd., London, GB;<br>Class A96, AN 1997-241750<br>XP002194778<br>& JP 09 077790 A (ASAHI MEDICAL CO LTD),<br>25 March 1997 (1997-03-25)<br>* abstract *<br>--- | 1-16 | TECHNICAL FIELDS SEARCHED (Int.Cl.7)<br>C08F |
| Y | EP 0 556 688 A (WOLFF WALSRODE AG)<br>25 August 1993 (1993-08-25)<br>* page 2, line 29 - line 39 *<br>* page 3, line 32 - line 52; claim 1 *<br>---<br>-/-- | 1-16 | |

The present search report has been drawn up for all claims

| Place of search | Date of completion of the search | Examiner |
|---|---|---|
| THE HAGUE | 2 April 2002 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

European Patent Office

# EUROPEAN SEARCH REPORT

Application Number
EP 01 12 1490

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 066 165 A (ASAHI KASEI KOGYO KABUSHIKI KAISHA) 8 December 1982 (1982-12-08) * claims 1-21 * | 1 | |
| A | EP 0 043 074 A (ASAHI KASEI KOGYO KABUSHIKI KAISHA) 6 January 1982 (1982-01-06) * claims 1-24 * | 1 | |
| A | FR 2 460 971 A (KURARAY CO., LTD.) 30 January 1981 (1981-01-30) * claims 1-23 * | 1 | |
| A | US 4 298 700 A (K. TAKASE) 3 November 1981 (1981-11-03) * claims 1-11 * | 1 | |
| A | DATABASE WPI Section Ch, Week 197717 Derwent Publications Ltd., London, GB; Class A91, AN 1977-30166Y XP002194779 & JP 52 035779 A (MARUZEN OIL CO LTD), 18 March 1977 (1977-03-18) * abstract * | 1 | |

TECHNICAL FIELDS SEARCHED (Int.Cl.7)

The present search report has been drawn up for all claims

| Place of search | Date of completion of the search | Examiner |
|---|---|---|
| THE HAGUE | 2 April 2002 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 12 1490

This annex lists the patent family membersrelating to the patent documents cited in the above-mentioned European search report.
The members are as contained in the European Patent Office EDP file on
The European Patent Office is in no way liable for these particulars which are merely given for the purpose of information.

02-04-2002

| Patent document cited in search report | Publication date | Patent family member(s) | Publication date |
|---|---|---|---|
| JP 2001040032 A | 13-02-2001 | EP 1160260 A1 | 05-12-2001 |
| | | US 2002004535 A1 | 10-01-2002 |
| GB 2034328 A | 04-06-1980 | JP 1177083 C | 14-11-1983 |
| | | JP 55104301 A | 09-08-1980 |
| | | JP 58004922 B | 28-01-1983 |
| | | JP 1394760 C | 11-08-1987 |
| | | JP 55058203 A | 30-04-1980 |
| | | JP 58003482 B | 21-01-1983 |
| | | DE 2943193 A1 | 30-04-1980 |
| | | FR 2439796 A1 | 23-05-1980 |
| | | IT 1125597 B | 14-05-1986 |
| | | SE 436886 B | 28-01-1985 |
| | | SE 7908859 A | 27-04-1980 |
| | | US 4314032 A | 02-02-1982 |
| FR 2333005 A | 24-06-1977 | JP 1070996 C | 30-10-1981 |
| | | JP 52065597 A | 31-05-1977 |
| | | JP 55019243 B | 24-05-1980 |
| | | DE 2653135 A1 | 08-06-1977 |
| | | FR 2333005 A1 | 24-06-1977 |
| | | GB 1530397 A | 25-10-1978 |
| | | US 4124748 A | 07-11-1978 |
| JP 9077790 A | 25-03-1997 | NONE | |
| EP 556688 A | 25-08-1993 | DE 4205281 A1 | 26-08-1993 |
| | | DE 59301063 D1 | 18-01-1996 |
| | | EP 0556688 A1 | 25-08-1993 |
| | | FI 930722 A | 22-08-1993 |
| | | JP 6041301 A | 15-02-1994 |
| | | US 5324777 A | 28-06-1994 |
| EP 66165 A | 08-12-1982 | JP 1044725 B | 29-09-1989 |
| | | JP 1572142 C | 25-07-1990 |
| | | JP 57190003 A | 22-11-1982 |
| | | AT 19089 T | 15-04-1986 |
| | | CA 1194644 A1 | 01-10-1985 |
| | | CS 8203485 A2 | 13-06-1985 |
| | | DE 3270365 D1 | 15-05-1986 |
| | | EP 0066165 A1 | 08-12-1982 |
| | | US 4452918 A | 05-06-1984 |
| EP 43074 A | 06-01-1982 | JP 1015822 B | 20-03-1989 |
| | | JP 1533593 C | 12-12-1989 |
| | | JP 57030945 A | 19-02-1982 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 01 12 1490

This annex lists the patent family membersrelating to the patent documents cited in the above-mentioned European search report.
The members are as contained in the European Patent Office EDP file on
The European Patent Office is in no way liable for these particulars which are merely given for the purpose of information.

02-04-2002

| Patent document cited in search report | | Publication date | Patent family member(s) | | Publication date |
|---|---|---|---|---|---|
| EP 43074 | A | | JP | 1601419 C | 18-02-1991 |
| | | | JP | 2019902 B | 07-05-1990 |
| | | | JP | 57108662 A | 06-07-1982 |
| | | | CA | 1157996 A1 | 29-11-1983 |
| | | | CS | 228510 B2 | 14-05-1984 |
| | | | DD | 159908 A5 | 13-04-1983 |
| | | | DE | 3166309 D1 | 31-10-1984 |
| | | | EP | 0043074 A2 | 06-01-1982 |
| | | | SU | 1311631 A3 | 15-05-1987 |
| | | | US | 4368275 A | 11-01-1983 |
| FR 2460971 | A | 30-01-1981 | JP | 1410962 C | 24-11-1987 |
| | | | JP | 56014504 A | 12-02-1981 |
| | | | JP | 62013963 B | 30-03-1987 |
| | | | JP | 1425967 C | 25-02-1988 |
| | | | JP | 56088413 A | 17-07-1981 |
| | | | JP | 62034242 B | 25-07-1987 |
| | | | DE | 3026356 A1 | 15-01-1981 |
| | | | FR | 2460971 A1 | 30-01-1981 |
| | | | GB | 2056997 A ,B | 25-03-1981 |
| | | | US | 4311805 A | 19-01-1982 |
| US 4298700 | A | 03-11-1981 | NONE | | |
| JP 52035779 | A | 18-03-1977 | JP | 1036749 C | 24-03-1981 |
| | | | JP | 55027082 B | 18-07-1980 |

EPO FORM P0459

For more details about this annex : see Official Journal of the European Patent Office, No. 12/82